# EUROPEAN PATENT APPLICATION

(11) **EP 1 920 992 A1**
(43) Date of publication of application: **14.05.2008**
(21) Application number: 06797320.6
(22) Date of filing: 01.09.2006
(51) Int. Cl.: B62D 5/04, H02K 5/22, H02K 11/00

(54) **ELECTRIC POWER STEERING DEVICE**

(30) Priority: 01.09.2005 JP 2005254162; 16.12.2005 JP 2005362658
(71) Applicant: NSK Ltd., Tokyo 141-8560 (JP)
(72) Inventor: IMAMURA, Yousuke c/o NSK STEERING SYSTEMS Co., Ltd., Gunma (JP); MAEDA, Masahiro NSK Ltd., Gunma (JP); OHNISHI, Koji NSK STEERING SYSTEMS Co., Ltd., Gunma (JP); YAMAMOTO, Takeshi NSK Ltd., Gunma (JP); EBUCHI, Tomoaki c/o NSK Ltd., Gunma (JP)
(74) Representative: Grünecker, Kinkeldey, Stockmair & Schwanhäusser Anwaltssozietät
(86) International application number: PCT/JP2006/317378
(87) International publication number: WO 2007/026894

(57) **Abstract**

An electric power steering apparatus according to the invention includes an electric motor to be connected to a control unit through bus bars respectively projected from the inside of the electric motor and is structured such that the control unit controls the drive of the electric motor to thereby assist the steering of a vehicle. The control unit is fixed to a fixing base which is structured as a composing element of the electric motor, and the fixing base covers the connecting portion between the bus bars and control unit.

## Description

### [Technical Field]

The present invention relates to an electric power steering apparatus using an electric motor as a source for generating steering assisting torque and, more specifically, the invention relates to an electric power steering apparatus which is improved not only in a mounting structure for an electric motor and a control unit (ECU) disposed adjacent to the electric motor for controlling the drive of the electric motor, but also in a connecting structure for connecting together an electric motor for applying steering assisting torque to the steering system of a vehicle and a controller for controlling the drive of the electric motor.

### [Related Art]

In an electric power steering (EPS) apparatus which is carried on a vehicle or the like, an electric motor is driven according to steering torque applied thereto through steering wheels, and the rotation of the electric motor is transmitted through a reduction mechanism to a steering mechanism to thereby assist the steering of the vehicle. This electric motor for steering assistance is electrically connected to an ECU including a motor drive circuit and the like, and can be driven and controlled by the ECU.

This electric power steering apparatus, generally, includes a torque sensor for detecting steering torque applied to rotating steering wheels, an electric motor for assisting the operation of a driver, and a controller for controlling the drive of the electric motor, in which the electric motor is driven according to the steering torque detected by the torque sensor. The rotation output of the electric motor functions as steering assisting torque, and this rotation output is transmitted to the output shaft of a steering mechanism while it is reduced by a gear mechanism. Owing to this, while a steering power applied to the steering wheels is being assisted, the steering of the vehicle is carried out.

Conventionally, there is employed a structure which electrically connects together the ECU and electric motor using a harness. However, in such conventional connecting structure, in some cases, the harness is difficult to mount because of the layout of the vehicle and also there is a fear that extended wiring can give rise to electric power loss and to an increase in radio noises.

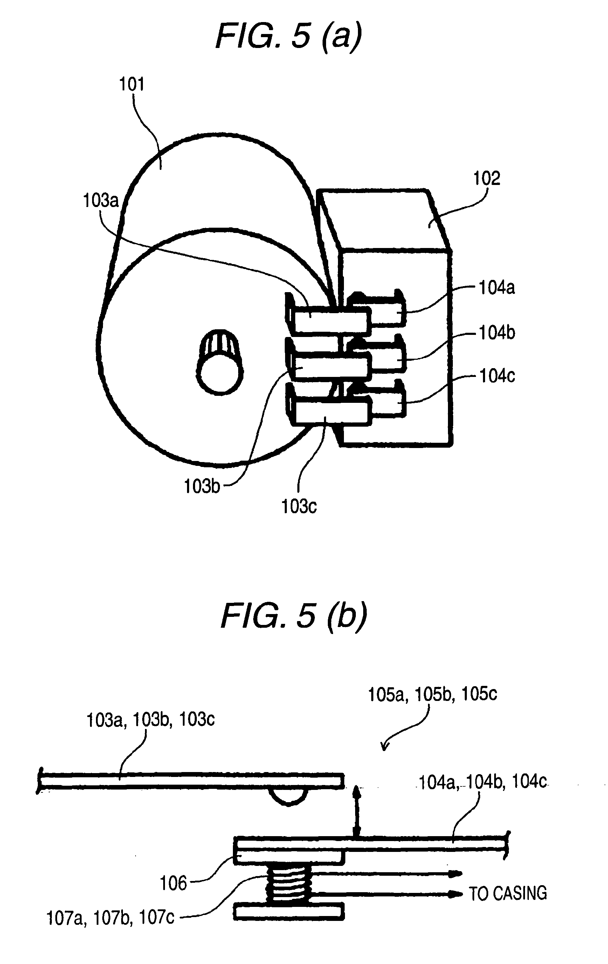

In order to solve the above problems, for example, in the below-cited patent reference 1, there is proposed a connecting structure in which an electric motor (a brushless motor) and an ECU (a casing) are disposed adjacent to each other; and, Fig. 5 is an explanatory view of this connecting structure. In Fig. 5, a brushless motor 101 and a casing 102 are connected together by three bus bars; and, the three bus bars are respectively structured such that bus bars 103a - 103c projected from the interior of the brushless motor 101 and bus bars 104a - 104c projected from the interior of the casing 102 are connected together by switches 105a - 105c respectively shown in Fig. 5(b).

The bus bars 103a - 103c are respectively made of magnetic material and, to the sides of the bus bars 104a - 104c that do not face the bus bars 103a - 103c, there are fixed electromagnets 107a -107c through an insulating member 106. When the electromagnets 107a - 107c are turned on using the switches 105a - 105c, the bus bars 103a - 103c arranged on the brushless motor 101 side are attracted to the bus bars 104a - 104c arranged on the casing 102 side, so that these bus bars are connected together.

Patent Reference 1: JP-A-2005-206084

Further, when connecting together the electric motor and controller, which is composed of an electronic control unit (ECU) including various electric circuits such as a CPU, of the electric power steering apparatus, in the case of the structure for connecting together the above two elements using a harness due to the layout of a vehicle for carrying the electric power steering apparatus on the vehicle, the harness is sometimes hard to mount. Also, the required degree of the performance of the electric power steering apparatus to be carried on the vehicle has been increasing year after year and, especially, the electric power steering apparatus has been required that it can enhance the rotating steering performance and heat radiating performance as well as it can reduce radio noises. In this case, it is also possible to employ a structure which connects together the electric motor and controller using a connector. However, when a connector highly resistant to the radio noises is used, the cost of the structure is high.

As a measure for solving such problems, there is proposed a structure in which an electric motor and a controller are unified as an integral body (see the patent reference 2).
Patent Reference 2: JP-A-2003-267233

### [Disclosure of the Invention]

### [Problems to be solved by the Invention]

However, in the conventional structure shown in Fig. 5 for connecting together the electric motor and ECU of the power steering apparatus, since the bus bars 103a - 103c on the brushless motor 101 side and bus bars 104a - 104c on the casing 102 side, which function as an electric connecting portion, are bare to the outside, there is a fear that electromagnetic wave noises can occur and have ill influences on other electric parts carried on a vehicle. Further, there is a fear that a foreign object can touch the electric connecting portion to thereby short it.

Therefore, when employing such conventional connecting structure, it is necessary to separately provide a cover member which is used not only to shield electromagnetic waves generated in the electric connecting portion but also to prevent a foreign object from touching the electric connecting portion. This requires labor for mounting the cover member as well as increases the number of parts and the number of assembling steps, thereby increasing the manufacturing cost of the structure. Also, to secure a space for provision of the cover member makes it difficult to save a space for carrying the structure on the vehicle.

Accordingly, the present invention aims at solving the above problems found in the conventional connecting structures. Thus, it is an object of the invention to provide an electric power steering apparatus which is improved in a mounting structure for mounting an electric motor and a control unit (ECU) for controlling the electric motor as well as can reduce the space and cost thereof.

Also, in the conventional technology, there is employed a structure for unifying an electric motor and a controller into an integral body. Specifically, when connecting together the electric motor and controller, there is employed a structure in which the bus bars are projected externally from a power substrate stored within the housing of the controller, and these bus bars are inserted into the housing of the electric motor and are screwed within the housing of the electric motor. Therefore, after mounted on a gear box, the ECU is difficult to mount and remove as a single part, which is not sufficient to enhance the efficiency of an assembling operation. Further, in the conventional technology, the bus bar insertion opening on the electric motor side is open and thus, when delivery or transporting the electric motor as a single part, it is necessary to separately provide means for preventing dust and the like from entering the bus bar insertion opening.

Accordingly, the present invention is made to solve the above problems found in the conventional technology. Thus, it is an object of the invention to enhance the assembling efficiency of an electric power steering apparatus when the electric motor and controller thereof are connected together.

### [Means for solving the Problems]

The above object of the invention is attained by an electric power steering apparatus including an electric motor to be connected to a control unit through bus bars respectively projected from the inside of the electric motor, the control unit controlling drive of the electric motor to assist a steering of a vehicle, wherein the control unit is fixed to a fixing base made as a composing element of the electric motor, and the fixing base covers the connecting portion between the bus bars and the control unit.

Also, the above object is attained effectively by the electric power steering apparatus wherein the fixing base in such a manner that the fixing base shields electromagnetic waves generated in the connecting portion between the bus bars and the control unit.

Further, the above object is attained effectively by the electric power steering apparatus wherein the fixing base includes a bus bar recessed portion in which the bus bars projected from the inside of the electric motor is disposed, and the opening of the bus bar recessed portion is closed by the control unit to be fixed to the fixing base.

Further, the above object is attained effectively by the electric power steering apparatus wherein the bus bar recessed portion includes in the bottom surface thereof bolt insertion holes into which bolts for connecting the bus bars to connecting terminals of the control unit are inserted, and the bolt insertion holes are closed by a seal member after the bolts are respectively inserted into the bolt insertion holes to connect together the bus bars and the connecting terminals respectively.

Further, the above object can be accomplished more effectively by an electric power steering apparatus in which the inside of the above bus bar recessed portion is insulated by a non-conductive member.

Also, according to the invention, there is provided an electric power steering apparatus including: an electric motor for applying steering assisting torque to a steering system of a vehicle; a controller for controlling drive of the electric motor; and a fixing base as a composing element of the electric motor for fixing the electric motor and the controller thereto, wherein the fixing base includes two or more motor bus bars for transmitting a motor drive current to the respective motor coils of the electric motor, the connecting terminal portions of the respective motor bus bars are projected from the fixing base, the respective motor coils of the electric motor fixed to the fixing base are connected to the motor bus bars, and the respective power line bus bars of the controller fixed to the fixing base for transmitting the drive current are electrically connected to the connecting terminal portions of the motor bus bars.

According to the above-mentioned structure, since the power line bus bars of the controller are respectively connected to the connecting terminal portions of the motor bus bars outside the casings of the controller and electric motor, the controller and electric motor can be electrically connected to each other without using a harness. Therefore, after the controller and electric motor are assembled to a gear box, without removing the electric motor, the controller can be replaced easily as a single part, thereby being able to contributing toward enhancing the assembling efficiency of the electric motor and controller.

Also, since no opening is formed in the electric motor and controller, a foreign object such as dust can be prevented from entering the electric motor and controller.

Further, since screws are used when connecting together the power line bus bars of the controller and the connecting terminal portions of the motor bus bars of the electric motor, an operation to assemble together the controller and electric motor can be carried out easily.

Also, according to the invention, in the connecting terminal portions of the motor bus bars and the connecting terminals of the power line bus bars, screw insertion slotted holes are respectively formed in such a manner that the longitudinal directions thereof intersect with each other. This makes it possible not only to absorb an installation error occurring when the power line bus bars are respectively connected to the connecting terminal portions of the motor bus bars by screws, but also to ease stresses produced in the mounting operation.

Further, since each of the motor bus bars includes a bent portion formed in the portion thereof projected from the fixing base, even when a force caused by vibrations is applied to the leading end side of each bus bar, the bent portion is deformed according to such vibrations to thereby be able to prevent stresses from concentrating on the base end side of each bus bar.

Also, since the motor bus bars except for the connecting terminal portions thereof are covered with an insulating member, and also since an insulating member is interposed between the respective motor bus bars, it is possible to prevent the bus bars from touching each other and prevent the bus bars from touching the conductive member, thereby being able to prevent the occurrence of short-circuiting.

According to the invention, the connecting terminal portions of the motor bus bars are covered with a conductive member and a protect cover for covering the surface of the conductive member, and the conductive member of the protect cover is electrically connected to the casing of the controller. This structure can cut off noises coming from the outside and can cut off the radiation of noises to the outside, thereby being able to enhance the shield performance of the present electric power steering apparatus. Also, it is possible not only to prevent the occurrence of short-circuiting that could be otherwise caused by contact between other parts and the respective bus bars and terminals, but also to prevent a foreign object such as dust from sticking to the respective motor bus bars and the like.

Since a case of the electric motor is electrically connected to a case of the controller through the fixing base and common noises generated in the electric motor are fed back to the case of the controller, the radiation of the common noises can be prevented.

Also, because the electric motor and controller are mounted on a gear box under the condition that the electric motor and the controller have been fixed to the fixing base, there can be carried out an operation to assemble together the electric motor and controller before they are mounted onto the gear box. This can contribute toward enhancing the efficiency of the assembling operation.

### [Effects of the Invention]

According to an electric power steering apparatus of the invention, the fixing base, which is structured as a composing element of the electric motor, can be used not only to fix the control unit (ECU) but also to cover the connecting portion between the bus bars and control unit. This structure not only can prevent electromagnetic noises generated in the connecting portion from having ill influences on electric parts provided outside the connecting portion but also can prevent a foreign object from touching the connecting portion to thereby cause short-circuiting. As a result of this, since there is eliminated the need for separate provision of a cover member for covering the connecting portion, the number of parts and the number of assembling steps can be reduced, thereby being able to reduce the manufacturing cost of the electric power steering apparatus. Also, since the space of the electric power steering apparatus can be saved, the freedom of the mounting layout of the electric power steering apparatus onto a vehicle can be enhanced.

Also, owing to employment of a structure in which the fixing base includes a bus bar recessed portion and the opening of the bus bar recessed portion is closed by a control unit which is fixed to the fixing base, electromagnetic waves can be shielded easily without increasing the number of parts and the number of assembling steps.

Further, according to the invention, after the bus bars of the electric motor and the connecting terminals of the control unit are connected together by bolts, the bolt insertion holes are closed by the seal member. This can shield the electromagnetic waves more positively.

Also, according to the invention, since the power line is electrically connected without using a harness or a connector, there can be provided the following effects: that is, the output performance of the electric power steering apparatus can be enhanced and the manufacturing cost thereof can be reduced; radiation noises can be reduced; the anti-noise performance and assembling efficiency of the electric power steering apparatus can be enhanced; the efficiency of an operation to mount and remove the controller as a single part after it is mounted on the gear box can be enhanced; and, the heat radiation performance of the electric power steering apparatus can be enhanced. Also, an improvement over the patent reference 1 is that the efficiency of the operation to mount and remove the controller as a single part after it is mounted on the gear box is enhanced.

### [Brief Description of the Drawings]

[Fig. 1] Fig. 1 is a perspective view of a mounting structure for mounting the electric motor and ECU of an electric power steering apparatus according to an embodiment of the invention.
[Fig. 2] Fig. 2 is an exploded perspective view of the mounting structure shown in Fig. 1.
[Fig. 3(a)] Fig. 3(a) is a section view of the main portions of a connecting portion between the electric motor and ECU shown in Fig. 1.
[Fig. 3(b)] Fig. 3(b) is a section view of the main portions of the connecting portion, showing a state in which, in addition to Fig. 3(a), a non-conductive member is provided inside a recessed portion.
[Fig. 4] Fig. 4 is a perspective view of the mounting structure shown in Fig. 1, showing a state in which a bolt insertion hole is sealed by a seal member.
[Fig. 5(a)] Fig. 5(a) is an explanatory view of a connecting state between the electric motor (brushless motor) and ECU (casing) of a conventional electric power steering apparatus: Specifically, it is an outer perspective view of the electric power steering apparatus in which the casing and brushless motor are unified as an integral body.
[Fig. 5(b)] Fig. 5 (b) is an explanatory view of the connecting state between the electric motor (brushless motor) and ECU (casing) of the conventional electric power steering apparatus: Specifically, it is a typical view of the switch portion of bus bars in the conventional electric power steering apparatus.
[Fig. 6] Fig. 6 is a side view of an electric power steering apparatus according to the invention.
[Fig. 7] Fig. 7 is a bottom view of the electric power steering apparatus shown in Fig. 6.
[Fig. 8] Fig. 8 is a perspective view of an electric motor and a fixing base.
[Fig. 9] Fig. 9 is a perspective view of the fixing base and bus bars, when they are viewed from above.
[Fig. 10] Fig. 10 is a perspective view of the fixing base and bus bars, when they are viewed from laterally.
[Fig. 11] Fig. 11 is a side view of a bus bar.
[Fig. 12] Fig. 12 is a perspective view of a controller.
[Fig. 13] Fig. 13 is a perspective view of a connecting terminal, when it is viewed from ahead.
[Fig. 14] Fig. 14 is an internal structure view of the connecting terminal.
[Fig. 15] Fig. 15 is an internal structure view of the connecting terminal, showing a state in which nuts are mounted.
[Fig. 16] Fig. 16 is a perspective view of a protect cover.
[Fig. 17] Fig. 17 is a section view of the main portions of the protect cover.
[Fig. 18(a)] Fig. 18(a) is an explanatory view of a step of mounting an electric power steering apparatus.
[Fig. 18(b)] Fig. 18 (b) is an explanatory view of the step of mounting the electric power steering apparatus.
[Fig. 18(c)] Fig. 18 (c) is an explanatory view of the step of mounting the electric power steering apparatus.
[Fig. 19] Fig. 19 is a section view of the main portions of a protect cover and a casing, showing a state in which the protect cover is mounted on the casing.

### [Description of Reference Numerals]

- 10:: Electric power steering apparatus
- 12:: Electric motor
- 14:: Controller
- 16:: Fixing base
- 22:: Motor bus bar
- 26:: Main body
- 30:: Connecting terminal portion
- 34:: Casing
- 38:: Protect cover
- 40:: Connecting terminal
- 201:: Electric motor
- 202:: Fixing base (motor flange)
- 203:: Control unit (ECU)
- 206:: Bus bar
- 207:: Bus bar recessed portion
- 209:: Connecting bolt insertion hole
- 210:: Connecting bolt
- 211:: Terminal base (connecting terminal)
- 212:: Conductive seal member (seal tape)

### [Best Mode for Carrying Out the Invention]

### (First Embodiment)

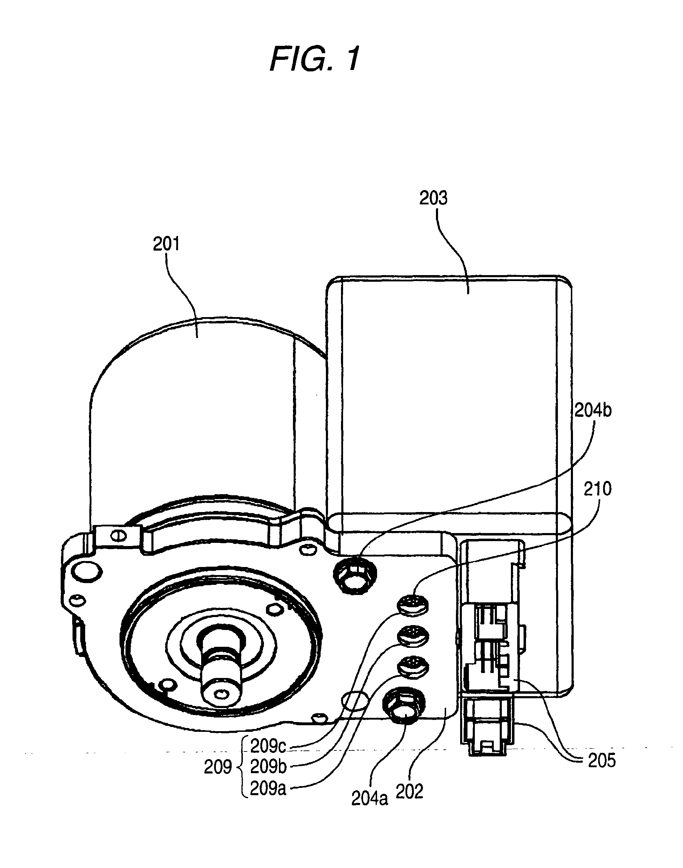

Now, description will be given below of a first embodiment according to the invention with reference to Figs. 1 to 4.

Fig. 1 is a perspective view of a mounting structure for mounting the electric motor and control unit (ECU) of an electric power steering apparatus according to an embodiment of the invention. In Fig. 1, an electric motor 201 for steering assistance includes a fixing base 202 formed by extending a motor flange which is an element of the composing parts of the electric motor 201. To the fixing base 202, there is fixed a control unit (ECU) 203 for controlling the drive of the electric motor 201 through fixing bolts 204a, 204b. That is, according to the present mounting structure, the electric motor 201 and ECU 203 are disposed adjacent to each other. The ECU 203 is connected to other electric parts such as a power source and various sensors through harnesses (not shown) to be connected to connectors 205 which are provided in the bottom portion of the ECU 203. According to the present embodiment, the fixing base 202 is formed by extending the motor flange; however, this is not limitative but, for example, the fixing base 202 may also be formed by extending a motor case.

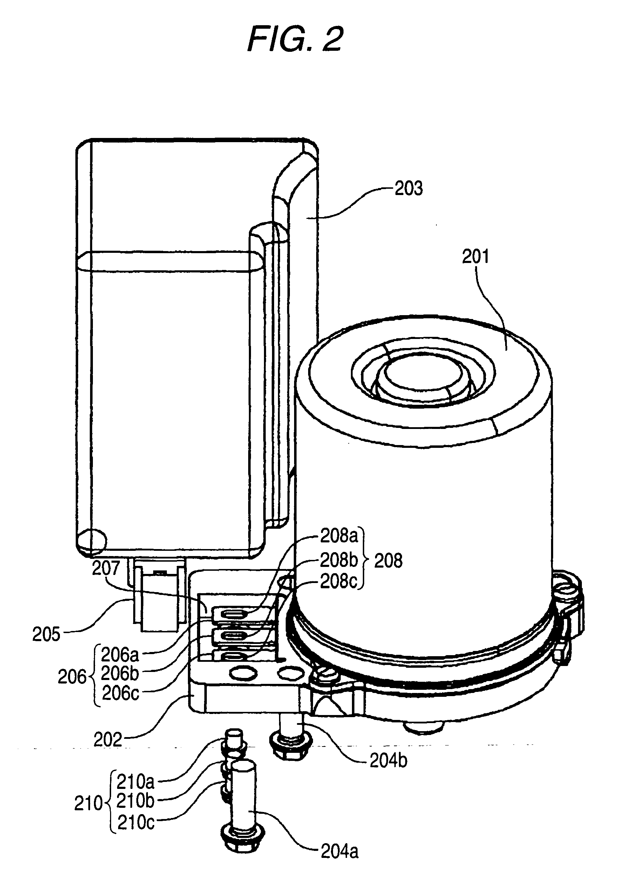

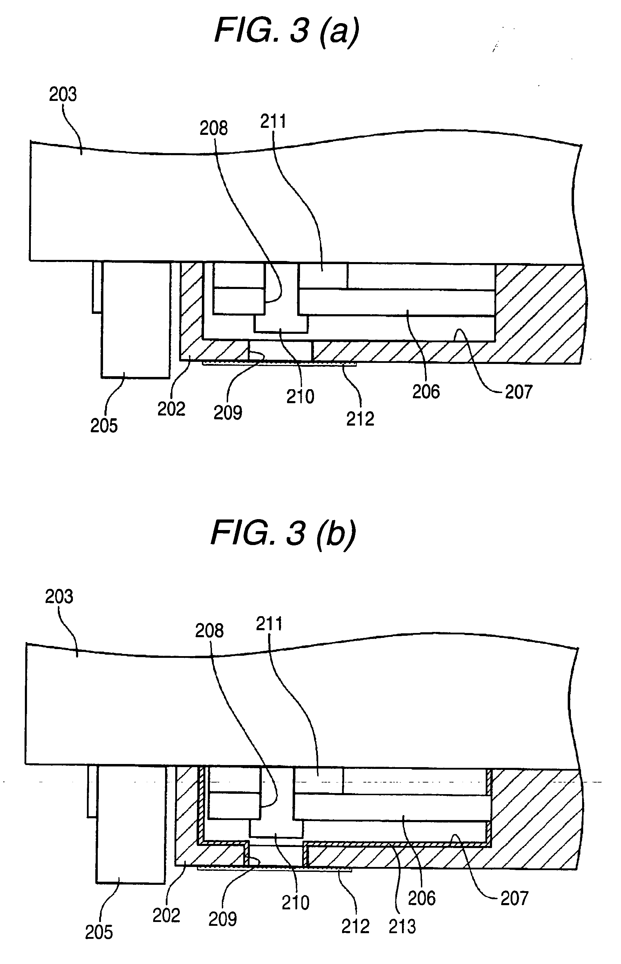

Fig. 2 is an exploded perspective view of the mounting structure shown in Fig. 1. Fig. 3 (a) is a section view of the main portions of a connecting portion between the electric motor 201 and ECU 203 shown in Fig. 1. In Fig. 2, in the surface of the fixing base 202 to which the ECU 203 is to be fixed, there is formed a bus bar recessed portion 207 in which there can be provided three bus bars 206 (206a, 206b and 206c) respectively projected from the interior of the electric motor 201. In the bottom surface of the bus bar recessed portion 207, there are opened up three connecting bolt insertion holes 209 (209a, 209b and 209c) in such a manner that they respectively correspond to the positions of three connecting holes 208 (208a, 208b and 208c) which are respectively formed in the leading end portions of the three bus bars 206 (see Fig. 1). Three connecting bolts 210 (210a, 210b and 210c), which are to be inserted into the connecting bolt insertion holes 209 respectively, as shown in Fig. 3(a), are fastened through the connecting holes 208 of the bus bars 206 to a terminal base (a connecting terminal) 211 which is provided in the bottom portion of the ECU 203, whereby the electric motor 201 and ECU 203 are electrically connected to each other.

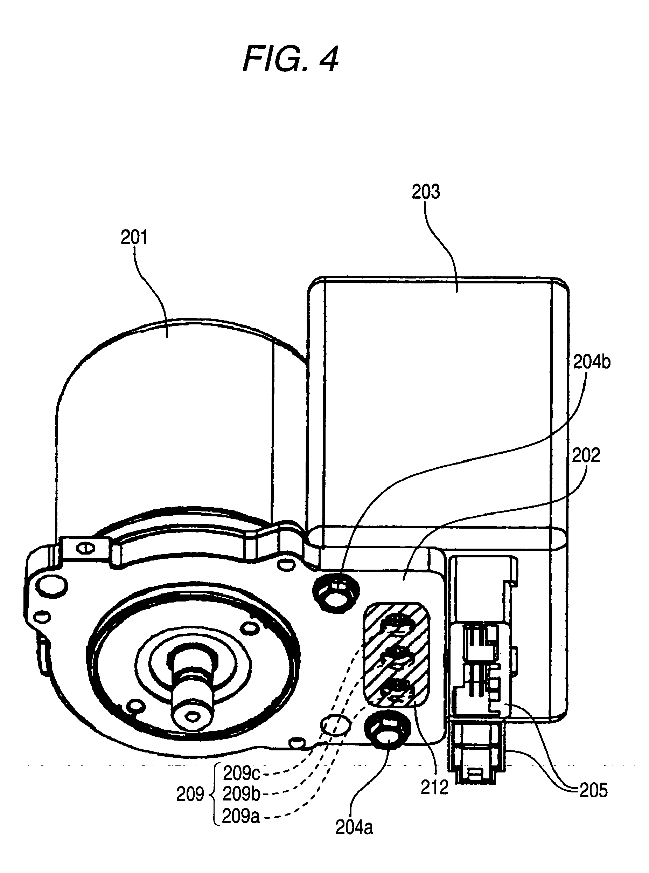

The upper surface of the bus bar recessed portion 207 is formed as an opening in order to be able to connect together the electric motor 201 and ECU 203, while this opening can be closed by mounting the ECU 203 onto the fixing base 202.
On the other hand, as regards the connecting bolt insertion holes 209 which are opened up in the bottom surface of the bus bar recessed portion 207, after the connecting bolts 210 are inserted through the connecting bolt insertion holes 209 to thereby connect together the bus bars 206 and terminal base 211, the connecting bolt insertion holes 209 are closed by a conductive seal member 212 such as seal tape (see Fig. 4). That is, the bus bars 206 and terminal base 211, which function as the connecting portion between the electric motor 201 and ECU 203, are covered with the fixing base 202, whereby not only the connecting portion is shielded such that electromagnetic waves are prevented from leaking to the outside but also a foreign object is prevented from touching the connecting portion from the outside.

Also, as shown in Fig. 3(b), there may be disposed an insulating member 213 composed of a non-conductive member on the inner surface of the bus bar recessed portion 207. In this case, even when the connecting bolt 210 happens to loosen, it is possible to prevent the connecting bolt 210 and bus bar recessed portion 207 from touching each other to thereby cause grounding.

As described above, in the electric power steering apparatus according to the present embodiment, the fixing base 202, which is formed by extending a motor flange which is an element of the composing parts of the electric motor 201, includes the bus bar recessed portion 207 in which the bus bars 206 projected from the interior of the electric motor 201 can be disposed, fixes and supports the ECU 203, and covers the bus bars 206 and terminal base 211 which function as the connecting portion between the electric motor 201 and ECU 203. This structure not only can shield electromagnetic waves generated in the connecting portion but also can eliminate the need for separate provision of a cover member for preventing a foreign object from touching the connecting portion. Thus, the present embodiment can reduce the number of parts and the number of assembling steps to thereby be able not only to reduce the manufacturing cost thereof but also to save the space of a vehicle for carrying the electric power steering apparatus and thus enhance the freedom of the carrying layout of the electric power steering apparatus in the vehicle.

Also, in the electric power steering apparatus according to the present embodiment, the bolt insertion holes 209 opened in the bottom surface of the bus bar recessed portion 207 of the fixing base 202 are closed by the conductive seal member 212 after the bus bars 206 and the terminal base 211 of the ECU 203 are connected together by the connecting bolts 210. This makes it possible to prevent a foreign obj ect from entering the electric power steering apparatus from the outside. Further, since the seal member 212 is made of conductive material, more positive electromagnetic wave shielding can be realized.

Also, in the electric power steering apparatus according to the present embodiment, since the non-conductive insulating member 213 is disposed on the inner surface of the bus bar recessed portion 207, it is possible to prevent the bus bar recessed portion 207 and connecting bolt 210 from touching each other and thus to prevent the occurrence of grounding.

Description has been given heretofore specifically of an embodiment of the invention. However, the invention is not limited to this but the present embodiment can also be changed properly without departing from the subject matter of the invention.

### (Second Embodiment)

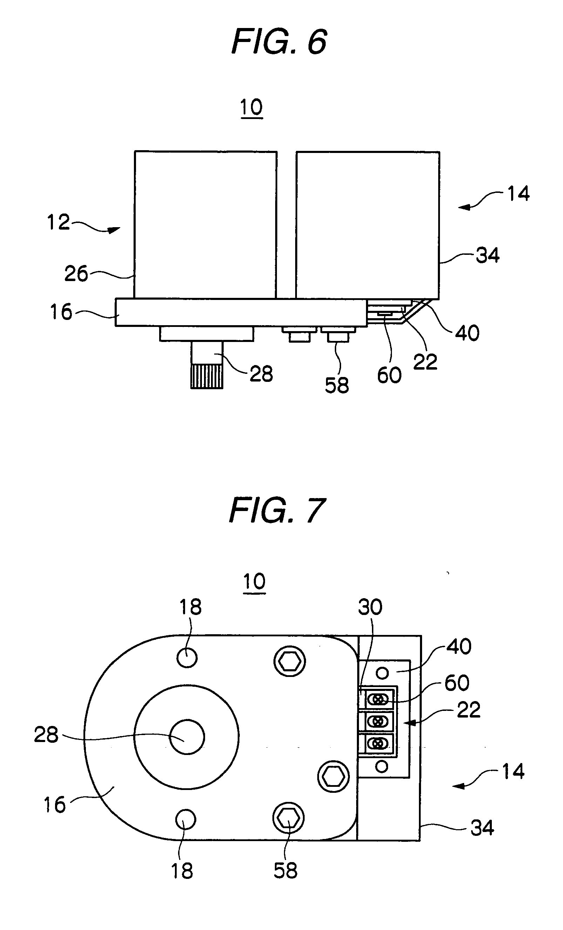

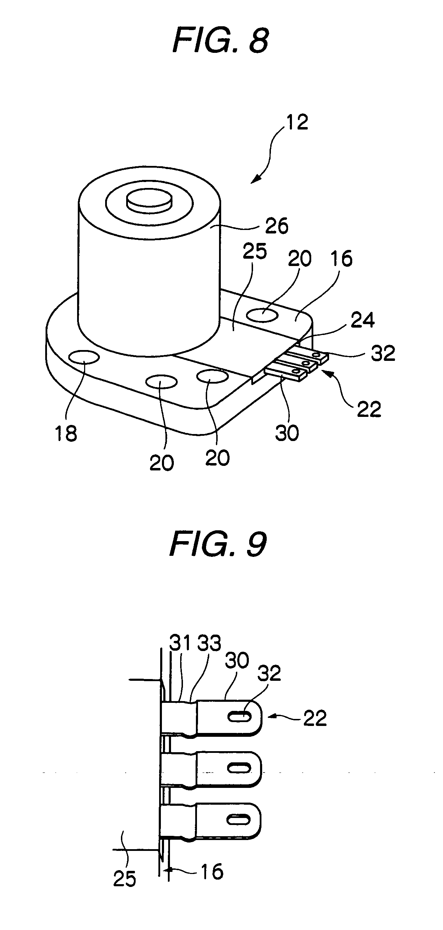

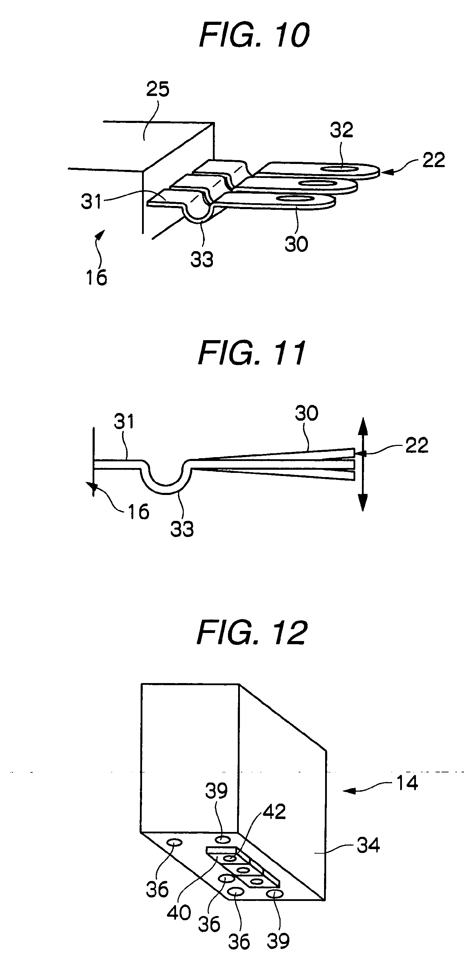

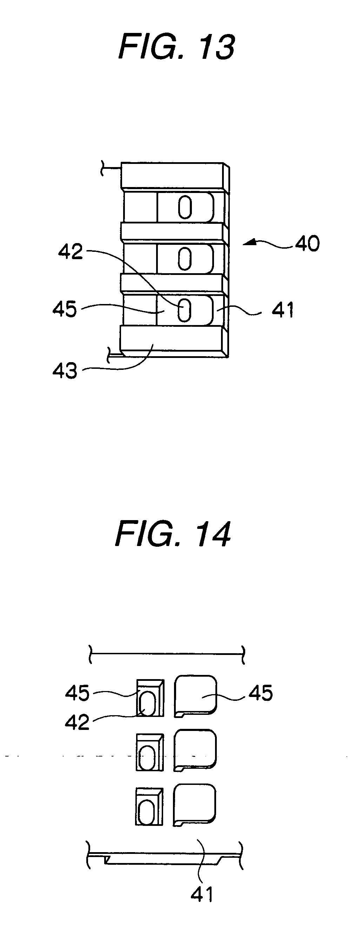

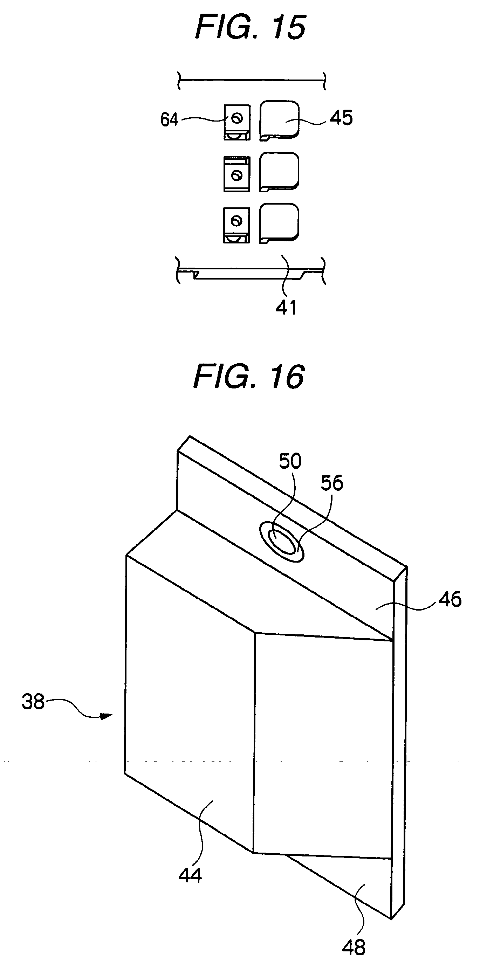

Now, description will be given below of a second embodiment according to the invention with reference to the accompanying drawings. Specifically, Fig. 6 is a side view of an electric power steering apparatus according to the present invention, Fig. 7 is a bottom view of the electric power steering apparatus shown in Fig. 6, Fig. 8 is a perspective view of an electric motor and a fixing base, Fig. 9 is a perspective view of the fixing base and bus bars when they are viewed from above, Fig. 10 is a perspective view of the fixing base and bus bars when they are viewed from laterally, Fig. 11 is a side view of a bus bar, Fig. 12 is a perspective view of a controller, Fig. 13 is a perspective view of a connecting terminal when it is viewed from ahead, Fig. 14 is an internal structure view of the connecting terminal, Fig. 15 is an internal structure view of the connecting terminal, showing a state in which nuts are mounted, and Fig. 16 is a perspective view of a protect cover.

In Figs. 6 to 16, an electric power steering (EPS) apparatus 10 includes an electric motor 12, a controller (ECU) 14, and the composing parts of the electric motor 12 such as a fixing base 16 which is formed by extending a motor flange or a motor casing, while the controller 14 is fixed on the fixing base 16 by a screw. In the fixing base 16 which is a composing part of the electric motor 12, there are formed not only two screw holes 18 which are used to fix the electric motor 12 to a gear box but also three screw holes 20 used to fix the controller 14 to the gear box.
Also, in the upper portion of the fixing base 16, there is formed a groove 24 into which there can be inserted three motor bus bars 22; insulating resin 25 is loaded into the groove 24; and, the motor bus bars 22 are respectively covered with the insulating resin 25 and also they are insulated from each other by the insulating resin 25.

The electric motor 12, as a motor for applying steering assisting torque to the steering system of a vehicle, is composed of, for example, a three-phase brushless motor; and, an output shaft 28 is rotatably inserted into a main body (motor casing) 26 which is formed in a cylindrical shape and is fixed to the fixing base 16. This output shaft 28 is structured such that it can be connected to a steering mechanism (not shown) functioning as a steering system. In the main body 26, there are stored a rotor (not shown) to which a permanent magnet constituting a magnetic pole is fixed, and a stator (not shown) which is disposed in the periphery of the rotor and is fixed to the main body 26.
The stator includes, for example, motor coils (armature windings) respectively composed of three phases, namely, U phase, V phase and W phase, while the motor coils are respectively connected to three motor bus bars 22 electrically.

Each of the three motor bus bars 22 is made of conductive metal, has a rectangular-shaped section, and is arranged in a linear manner. Each motor bus bar 22 includes a terminal connecting portion 30 formed on the leading end side thereof and a flat portion 31 formed on the base end side thereof; and, between the terminal connecting portion 30 and flat portion 31, there is formed a bent portion 33 which is bent worked in a horseshoe shape. The flat portion 31 of each motor bus bar 22 is disposed within the groove 24, while a portion of the flat portion 31 is projected from the fixing base 16 together with the bent portion 33 and connecting terminal portion 30.

That is, unless the bent portion 33 is formed in each bus bar 22, when a force caused by vibrations is applied to the leading end side of the bus bar 22, deforming stresses due to an installation error concentrate on the root side (base end side) of the bus bar 22, which raises a fear that the bus bar 22 itself and/or the insulating resin 25 can be broken.

On the other hand, according to a bent structure in which the bent portion 33 is formed in each bus bar 22, as shown in Fig. 11, even when a vertical-direction going force due to vibrations is applied to the leading end side of the bus bar 22, the bent portion 33 is allowed to deform according to such vibrations to thereby ease the concentration of stresses due to such vibrations onto the flat portion 31 and insulating resin 25, which can prevent the bus bar 22 itself or the insulating resin 25 against destruction.

In the connecting terminal portion 30 of each bus bar 22, there is formed a slotted hole 32 for insertion. The screw hole of the motor bus bar 22 is formed along the longitudinal direction (a direction perpendicular to the motor shaft) of the bus bar in order that, when connecting together the electric motor 12 and controller 14 by a screw, their mounting accuracy errors can be absorbed.

The controller 14 includes a casing 34 formed in an almost rectangular solid shape. In the bottom portion of the casing 34, there are formed not only three screw holes 36 used to fix the casing 34 to the fixing base 16 but also two screw holes 39 for fixing a protect cover 38 to the casing 34; and, between the two screw holes 39, there is fixed an insulating connecting terminal 40. The insulating connecting terminal 40, as shown in Figs. 13 to 15, includes a terminal hold base 41 formed in a flat plate shape, two or more insulating partition walls 43 respectively formed in the terminal hold base 41, and power line bus bars 45 respectively interposed between the respective insulating partition walls. In each of the power line bus bars 45, there is formed a screw insertion slotted hole 42 in correspondence to the slotted hole 32 of the motor bus bar 22; and, on the back surface side of each slotted hole 42, there is provided a nut 64. Each slotted hole 42 is formed such that the longitudinal direction thereof intersects with the longitudinal direction of the slotted hole 32 of the bus bar 22.

That is, in order that, even when each motor bus bar 22 is shifted from the intersecting direction of the output shaft 28 of the electric motor 12, or even when there is generated a difference between the pitches of the slotted hole 32 of the motor bus bar 22 and the slotted hole 42 of the insulating connecting terminal 40, the motor bus bar 22 and insulating connecting terminal 40 can be connected together positively without applying any stress to the motor bus bar 22 and the power line bus bar 45, the slotted hole 42 of the terminal 45 and the slotted hole 32 of the motor bus bar 22 are formed in such a manner that their respective longitudinal directions intersect with each other.

Within the casing 34, there are stored a drive circuit (not shown) which receives a signal from a torque sensor (not shown) used to detect a steering power and information expressing the running states of a vehicle such as a steering angle and a vehicle speed and generates a motor drive current, and other elements. This drive circuit is allowed to output a motor driving current to the connecting terminal 40 through the power line bus bars (45, 45, and 45) of U phase, V phase and W phase; and, each power line bus bar 45 includes the slotted hole 42 on the side of the surface thereof that is connected to the motor. Also, although the casing 34 is made of metal, since the insulating connecting terminal 40 is disposed in such a manner that it is projected from the bottom portion of the casing 34, even when the casing 34 is fixed on the fixing base 16 by a screw, it is possible to prevent the casing 34 from touching the respective motor bus bars 22 to thereby cause shorting.

The protect cover 38 is formed as an integral body of a projecting portion 44 and two flat-plate-shaped fixed portions 46 and 48 respectively disposed on the two sides of the projecting portion 44; and, the projecting portion 44 is formed to have a shape capable of covering the connecting terminal portions 30 of the respective motor bus bars 22. In the fixed portions 46 and 48, there are opened up screw holes 50 respectively. The protect cover 38 is made mainly of a conductive member (metal) 52 and, on the front and back surfaces of the conductive member 52, there are coated or molded insulating members (insulator) 54. However, in order to connect together the casing 34 and protect cover 38 using a screw, in the periphery of each screw hole 50, there is formed a ring-shaped connecting portion 56, while no coating or molding treatment is enforced on the connecting portion 56.

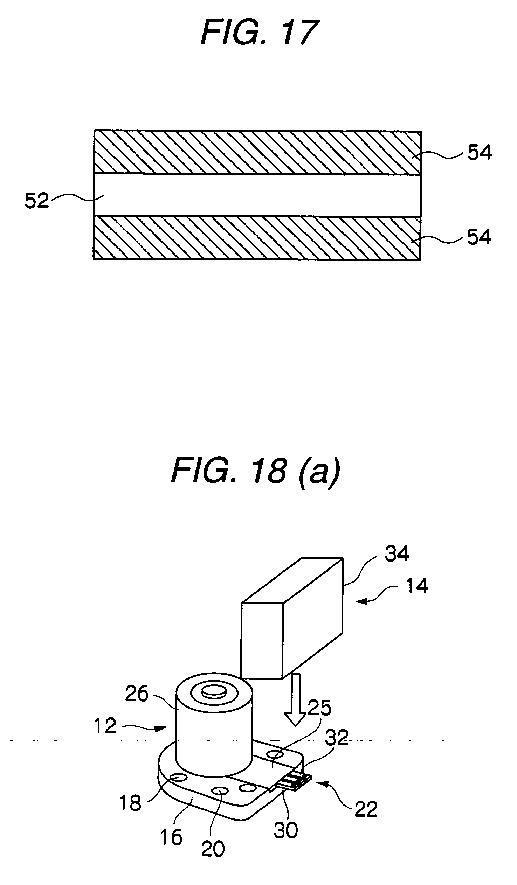

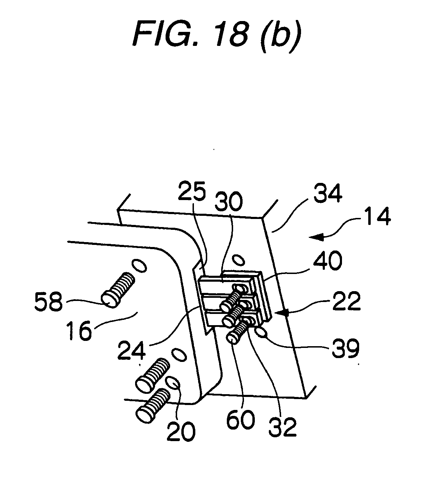

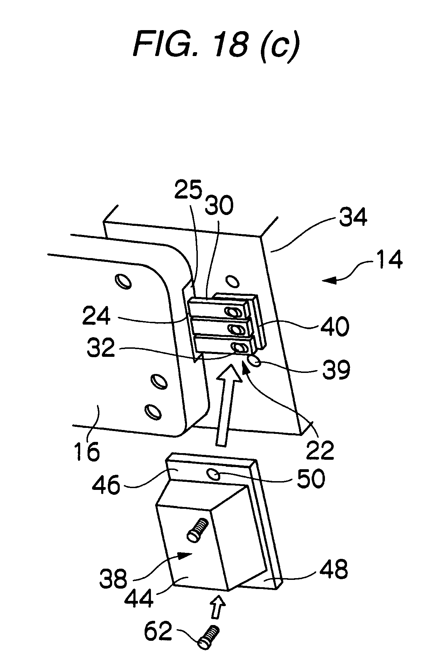

Next, description will be given below of steps of mounting the electric power steering apparatus 10 with reference to Fig. 18. Firstly, as shown in Fig. 18(a), the main body 26 of the electric motor 12 is placed on the fixing base 16 formed of a composing element of the electric motor 12, the motor bus bars 22 are respectively disposed in the groove 24, and the main body 26 is fixed to the fixing base 16 using a screw. After then, the controller 14 is placed onto the fixing base 16 adjacently to the main body 26 of the electric motor 12.

Next, as shown in Fig. 18 (b), a screw 58 is inserted into the screw hole 20 of the fixing base 16 and the case 14 is fixed onto the fixing base 16 using the screw 58. Owing to this, the motor bus bars 22 are arranged so as to face the connecting terminal 40. Also, the main body 26 functioning as a motor casing is connected to the casing 14 through the fixing base 16 and screw 58, whereby common noises generated in the electric motor 12 are fed back to the casing 34 of the controller 14 to thereby be able to control the radiation of the common noises.

Next, when screws 60 are respectively inserted into the slotted holes 32 of the respective motor bus bars 22, the leading end sides of the respective screws 60 are inserted into the slotted holes 42 of the connecting terminal 40 and are connected to the respective power line bus bars. That is, the motor bus bars 22 are electrically connected to their associated power line bus bars through the screws 60 respectively.

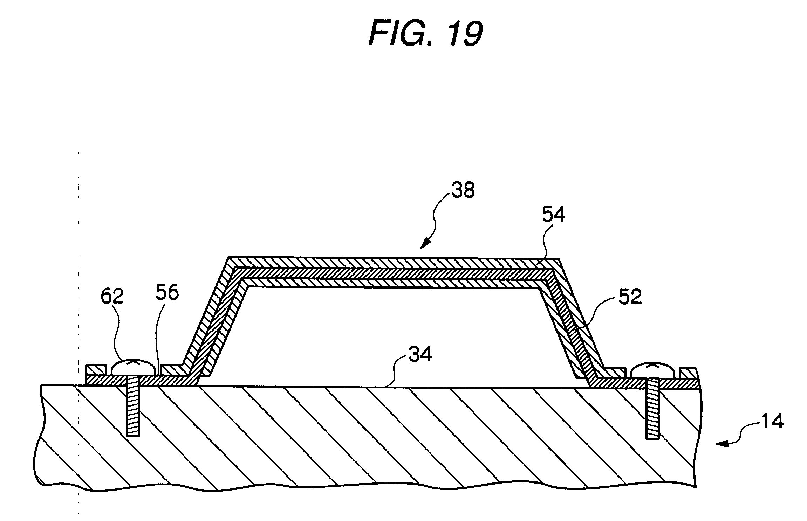

After then, as shown in Fig. 18(c), in a state where the protect cover 38 is arranged on the bottom portion side of the casing 34, the connecting terminal portions 30 of the motor bus bars 22 are covered with the protect cover 38, and the fixed portions 46, 48 are respectively mounted on the bottom portion of the casing 14, when screws 62 are respectively inserted into the screw holes of the fixed portions 46, 48 and the screws 62 are inserted into the screw holes 39 respectively, due to the fastened screws 62, the protect cover 38 is fixed to the bottom portion side of the casing 34. In this case, as shown in Fig. 19, since the screws 62 are fastened to the casing 34 in such a manner that they are in contact with their associated ring-shaped connecting portions 56, the conductive member 52 of the protect cover 38 can be electrically connected to the casing 34 through the screws 62. This can cut off noises coming from the outside and can cut off the radiation of the noises to the outside, thereby being able to enhance the shield performance. Also, according to this structure, shorting due to contact between the other parts and the respective motor bus bars 22 or terminals can be prevented, and also the sticking of a foreign object such as dust to the respective motor bus bars 22 or the like can be prevented.

According to the present embodiment, when the electric motor 12 and controller 14 are fixed to the fixing base 16, since the connecting terminal portions 30 of the respective motor bus bars 22 respectively projected from the fixing base 16 are connected to their associated power line bus bars within the casing 34 using the screws 60, the electric motor 12 and controller 14 can be electrically connected to each other, thereby being able to enhance the assembling performance of the present embodiment.

Also, according to the present embodiment, since the controller 14 is fixed on the fixing base 16 that is formed of a composing element of the electric motor 12, the controller 14 can be fixed onto the fixing base 16 before the electric motor 12 and controller 14 are mounted onto the gear box, which can enhance the efficiency of an assembling operation to mount the electric motor 12 and controller 14 onto the gear box.

Since the fixing base 16 according to the present embodiment functions as a heat radiating portion capable of radiating heat generated from the electric motor 12 and controller 14, the heat radiating performance of the present embodiment can be enhanced. Also, when grease is applied onto the contact surfaces of the main body 26 of the electric motor 12 and fixing base 16 as well as onto the contact surfaces of the casing 34 of the controller 14 and fixing base 16, the heat radiating performance of the present embodiment can be enhanced further.

Also, according to the present embodiment, since the electric motor 12 and controller 14 are unified together while they are fixed to the fixing base 16, the electric motor 12 and controller 14 can be electrically connected to each other without using a harness, thereby being able to contributing toward reducing electric noises.

And, since the respective motor bus bars 22 are covered with the protect cover 38 and the protect cover 38 is electrically connected to the casing 34, when a motor drive current is transmitted from the controller 14 to the electric motor 12, noises coming from the outside can be cut off and the radiation of noises to the outside can be cut off, thereby being able to enhance the shield performance of the present embodiment. Also, not only shorting owing to contact between the other parts and the respective motor bus bars 22 or terminals can be prevented, but also the sticking of a foreign object such as dust to the motor bus bars 22 or the like can be prevented.

By the way, the fixing base 16 can also made of a different element (a separate element) from the composing element of the electric motor 12.

Also, according to the above-described embodiments, the slotted holes 32 of the motor bus bars 22 are formed in the longitudinal direction of the bus bars 22, and the slotted holes 42 of the power line bus bars 45 are formed in the lateral arrangement direction of the terminals 45. However, alternatively, the slotted holes of the respective bus bars may also be formed in such a manner that the slotted holes shown in the above-mentioned embodiments are combined with slotted holes formed in a direction which intersects with the former slotted holes in a plane direction. Still further, either of the screw holes of the motor bus bars or the screw holes of the power line bus bars may be formed as slotted holes, or both of them may be formed in any other shape than the shape of the slotted holes, for example in a circular shape.

Although description has been given heretofore of the invention in detail with reference to the above-mentioned specific embodiments, it is obvious to a person skilled in the art that various changes and modifications are also possible without departing from the spirit and scope of the invention.
The present application is based on the Japanese Patent Application (Patent Application No. 2005-254162) filed on September 1, 2005 and the Japanese Patent Application (Patent Application No. 2005-362658) filed on December 16, 2005, and thus the contents of these applications are incorporated herein for reference.

### [Industrial Applicability]

The invention can improve a mounting structure for mounting an electric motor and a control unit (ECU) disposed adjacent the electric motor for controlling the drive of the electric motor, can enhance the efficiency of an assembling operation to connect together the electric motor and controller, and can reduce the space and cost of an electric power steering apparatus.

## Claims

1. An electric power steering apparatus comprising:
an electric motor to be connected to a control unit through bus bars respectively projected from the inside of the electric motor, the control unit controlling drive of the electric motor to assist a steering of a vehicle, wherein
the control unit is fixed to a fixing base as a composing element of the electric motor, and
the fixing base covers a connecting portion between the bus bars and the control unit.

2. The electric power steering apparatus as set forth in Claim 1, wherein
the fixing base shields electromagnetic waves generated in the connecting portion between the bus bars and the control unit.

3. The electric power steering apparatus as set forth in Claim 1 or 2, wherein
the fixing base includes a bus bar recessed portion in which the bus bars projected from the inside of the electric motor is disposed, and
the opening of the bus bar recessed portion is closed by the control unit to be fixed to the fixing base.

4. The electric power steering apparatus as set forth in Claim 3, wherein
the bus bar recessed portion includes in the bottom surface thereof bolt insertion holes into which bolts for connecting the bus bars to connecting terminals of the control unit are inserted, and
the bolt insertion holes are closed by a seal member after the bolts are respectively inserted into the bolt insertion holes to connect together the bus bars and the connecting terminals respectively.

5. The electric power steering apparatus as set forth in Claim 4, further comprising:
a non-conductive member for insulating the inside of the bus bar recessed portion.

6. An electric power steering apparatus comprising:
an electric motor for applying steering assisting torque to a steering system of a vehicle;
a controller for controlling drive of the electric motor; and
a fixing base as a composing element of the electric motor for fixing the electric motor and the controller thereto, wherein
the fixing base includes two or more motor bus bars for transmitting a motor drive current to the respective motor coils of the electric motor,
the connecting terminal portions of the respective motor bus bars are projected from the fixing base,
the respective motor coils of the electric motor fixed to the fixing base are connected to the motor bus bars, and
the respective power line bus bars of the controller fixed to the fixing base for transmitting the drive current are electrically connected to the connecting terminal portions of the motor bus bars.

7. An electric power steering apparatus comprising:
an electric motor for applying steering assisting torque to a steering system of a vehicle;
a controller for controlling drive of the electric motor; and
a fixing base as a composing element different from the electric motor, for fixing the electric motor and the controller thereto, wherein
the fixing base includes two or more motor bus bars for transmitting a motor drive current to the respective motor coils of the electric motor,
the connecting terminal portions of the respective motor bus bars are projected from the fixing base,
the respective motor coils of the electric motor fixed to the fixing base are connected to the motor bus bars, and
the respective power line bus bars of the controller fixed to the fixing base for transmitting the drive current are electrically connected to the connecting terminal portions of the motor bus bars.

8. The electric power steering apparatus as set forth in Claim 6 or 7, wherein
the power line bus bars are respectively connected to the connecting terminal portions of the motor bus bars by screws.

9. The electric power steering apparatus as set forth in Claim 8, wherein
in the connecting terminal portions of the motor bus bars and the connecting terminals of the power line bus bars, screw insertion slotted holes are respectively formed in such a manner that the longitudinal directions thereof intersect with each other.

10. The electric power steering apparatus as set forth in any one of Claims 6, 7, 8 and 9, wherein
each of the motor bus bars includes a bent portion formed in the portion thereof projected from the fixing base that exists nearer to the base side of the motor bus bar than the connecting terminal portion thereof.

11. The electric power steering apparatus as set forth in any one of Claims 6, 7, 8, 9 and 10, wherein
the motor bus bars except for the connecting terminal portions thereof are covered with an insulating member, and
an insulating member is interposed between the respective motor bus bars.

12. The electric power steering apparatus as set forth in any one of Claims 6, 7, 8, 9, 10 and 11, wherein
a casing of the electric motor is electrically connected to a casing of the controller through the fixing base.

13. The electric power steering apparatus as set forth in any one of Claims, 6, 7, 8, 9, 10, 11 and 12, further comprising:
a protect cover for covering the connecting terminal portions of the motor bus bars, wherein
the protect cover includes a conductive member and an insulating member for covering the surface of the conductive member, and
the protect cover is electrically connected to the casing of the controller through the conductive member.

14. The electric power steering apparatus as set forth in any one of Claims 6 to 13, wherein
the fixing base is mounted on a gear housing under the condition that the electric motor and the controller have been fixed to the fixing base.
